# EUROPEAN PATENT APPLICATION

(11) **EP 3 760 039 A1**
(43) Date of publication of application: **06.01.2021**
(21) Application number: 18907927.0
(22) Date of filing: 21.12.2018
(51) Int. Cl.: A01K 29/00, A01K 13/00, G06F 1/16, B64C 39/02, B64C 25/32, B64D 47/00, H04Q 9/00

(54) **REMOTE CONTROL SYSTEM AND METHOD FOR SUPPORTING ANIMAL'S INDEPENDENT TASK EXECUTION, AND ANIMAL WEARABLE MULTI-PURPOSE MODULAR PLATFORM SYSTEM**

(30) Priority: 27.02.2018 KR 20180023993
(71) Applicant: Homo Mimicus Co., Ltd, Daejeon 34051 (KR)
(72) Inventor: KIM, Sun Joong, Daejeon 35233 (KR)
(74) Representative: Kador & Partner PartG mbB
(86) International application number: PCT/KR2018/016435
(87) International publication number: WO 2019/168258

(57) **Abstract**

Remote control system and method to support separate operation of an animal disclosed. Remote control system to support separate operation of an animal includes a drone, capable of performing a separation operation, a wearable device, in form of being wearable on an animal and configured for docking the drone, a server, configured for communicating at least one of the drone and the wearable device to gather information that at least one of the drone or and the wearable device collects, and configured for transmitting a user command to at least one of the drone or and the wearable device, and a user terminal, configured for receiving and outputting the gathered information in communication with the server, and configured for receiving the user command regarding the drone and the wearable device.

## Description

### FIELD OF INVENTION

The present invention relates to remote control system and method that support a performance of separation tasks in animals, and to animal wearable and multi-purpose module platform system that can be mounted on dog harnesses and used for various purposes.

### BACKGROUND

Dogs are the oldest livestock among mammals and the most familiar to humans. These dogs not only serve as companion dogs, but also perform tasks such as blind guidance and various detections (exploring explosives, searching for missing persons, searching in enemy territory, finding suspects, tracking suspicious people, detecting enemy hideouts, etc.).

For example, a guide dog for the blind is a dog specially trained to guide the blind safely. The way these blind guide dogs communicate dangerous situations to users (blinds) is very primitive, such as taking actions such as dogs stopping halfway and physically guiding users, or giving users stimuli that have been converted into electrical signals by biting heavily a device such as gags that are passed on to their mouths.

In addition, in various detection tasks using dogs, the need for remote interaction between a human user and a subject (dog) performing a task is very high.

The search and detection tasks performed mainly by dogs are often performed in a very small space for human users to access. Or, because it is a very dangerous situation for human users to access, human users often need to give orders from a distance. Therefore, the need for a human user in a safe area to remotely check the situation of a dog and to issue a command appropriate to the situation whenever it necessary is very high.

So far, a solution has been proposed, such as checking a transmitted image remotely by equipping a dog with an image capturing device. However, such fixed equipment has limitations that the types of information collected are very limited, the amount of information also falls far short of recognizing situation, and that any physical instructions have been difficult to deliver to dogs that are performing independent tasks at a distance without using stimuli provided in contact with the dog's body, such as auditory or tactile information.

In the United States and Israel, a dog-shaped vest-type matching was developed, and a system for collecting information remotely by installing an image capturing device, a battery, and a transceiver was developed. However, it is only at the level of collecting images taken remotely, and it has not yet reached the level of developing a system for dogs to perform tasks independently.

In addition, recently, the need for equipment capable of taking images regarding the condition of the elderly living alone is increasing, and the demand for sports with companion dogs is also increasing, and thus a system for this is required.

In addition, in the case of a harness worn by a dog, a soft fabric is generally used. When the necessary items are combined in a harness, they are put into a pouch that can be stored and combined by use of velcro, belt, buckle, etc. Due to the characteristics of these structures and materials, there are limitations in the shape, weight, and application that can be combined.

Due to the nature of fabric harness, which is soft and hard to fix, there are many limitations in installing and using cameras and electronic equipment that are vulnerable to shaking.

### OBJECTIVES OF THE INVENTION

This invention is intended to provide a remote support system and method for remotely supporting an animal (especially, a dog) to perform separation tasks on their own in an environment independent of user (human) by utilizing a drone.

This invention is intended to provide an animal wearable and multi-purpose module platform system that is firmly secured to the body of an animal such as a dog, and equipped with various types of objects, special purpose devices, etc. in the form of modules so that the animal can be used for various purposes.

Other objectives and advantages will be easily understood from the following description.

### SUMMARY OF INVENTION

According to one aspect of the present invention, there is provided a remote control system of supporting an animal to perform a separation operation of animal. The system includes a drone, capable of performing a separation operation, a wearable device, in form of being wearable on an animal and configured for docking the drone, a server, configured for communicating at least one of the drone and the wearable device to gather information that at least one of the drone or and the wearable device collects, and configured for transmitting a user command to at least one of the drone or and the wearable device, and a user terminal, configured for receiving and outputting the gathered information in communication with the server, and configured for receiving the user command regarding the drone and the wearable device.

The wearable device is in form of a wearable vest that is put on to fit the animal and took off, wherein the wearable device further includes a docking module, being located on a back portion of the wearable device and configured for docking the drone.

The docking module includes an electromagnet that can activate or deactivate and a bottom of the drone comprises a docking part being made of a magnetically-attachable material, wherein the drone is docked to the docking module on activation of the electromagnet or released from the docking module on deactivation of the electromagnet.

The docking module is made of a magnetically-attachable material and an electromagnet that can activate or deactivate is located on a bottom of the drone, wherein the drone is docked to the docking module on activation of the electromagnet or released from the docking module on deactivation of the electromagnet.

The wearable vest is equipped with a rechargeable battery and a power supplying terminal connected to the rechargeable battery is located on the docking module, wherein the drone is charged by receiving a power from the rechargeable battery via a power receiving terminal on a bottom of the drone that is electrically connected to the power supplying terminal when the drone is docked.

The wearable device includes an image capturing module configured for taking a vertically-elongated image by use of more than two cameras that are arranged vertically, and a WD communication module configured for transmitting the image to the server.

The drone includes an image capturing module having at least one of an infrared image capturing unit and a general image capturing unit to take an around image, a sensor module configured for detecting a hazardous chemical substance, and a drone communication module configured for transmitting the around image and a sensing data of the sensor module to the server or the wearable device.

The drone further includes a laser pointer module configured for indicating a certain object with a laser pointer based on an analysis of the around image.

The server includes an image processing engine configured for processing image that the wearable device or the drone gathers according to a predetermined image processing algorithm, and a server control module configured for transmitting processed image to the user terminal.

If images that the wearable device gathered are taken by a plurality of cameras that are arranged vertically, the image processing engine combines the images to generate a vertically-elongated image, extracts a plurality of objects from the vertically-elongated image based on a learning result, identifies an object to track among the plurality of objects, trims the vertically-elongated image around the object to track, and adjusts a lateral fine movement on trimmed image due to a lateral movement that occurs when the animal walks.

If the drone has a sensor module capable of detecting a chemical material, the server further comprises a determination engine configure for analyzing a sensing data collected from the sensor module and determining a type of the chemical material and whether the chemical material is hazardous.

According to another aspect of the present invention, there is provided a method of remotely supporting a separation operation of an animal wearing a wearable device configured for docking a drone. The method includes moving an animal wearing a wearable device to which a drone is docked to an operation area, deploying the drone by releasing from the wearable device, performing a predetermined operation when the drone flies to reach the operation area, and returning and charging the drone by docking to the wearable device after performing the operation.

According to still another aspect of the present invention, there is provided an animal wearable multi-use module platform system. The system includes a wearable device that an animal can wear, and a module mounting device, being fixed to a top surface of the wearable device and configured for securing a module, wherein the module mounting device includes a base being fixed to the top surface of the wearable device, a module securing unit configured for securing the module to a top surface of itself, and links, being arranged between the base and the module securing unit and configured for adjusting a height of the module securing unit.

According to still another aspect of the present invention, there is provided an animal wearable multi-use module platform system. The system includes a wearable device that an animal can wear, a module platform, on which surface a plurality of holes are formed for various modules to be mounted, and a platform support, being arranged between the wearable device and the module platform to support the module platform in a flat position and configured for adjusting a height of the module platform.

The platform support includes a pair of front supports and a pair of rear supports, wherein the front support includes a front lower support being fixed to the wearable device, and a front upper support being coupled to the front lower support and extendable upwardly with respect to the front lower support, wherein the rear support includes a rear lower support being fixed to the wearable device, and a rear upper support being coupled to the rear lower support and extendable upwardly with respect to the rear lower support.

Other aspects, features, and advantages will be more apparent from accompanying drawings, claims and detailed description.

### EFFECTS OF INVENTION

According to embodiments of the present invention, there is an effect of remotely supporting an animal (especially, a dog) to perform independent tasks on its own in an environment independent of users (human).

Also, it is firmly secured to the body of an animal such as a dog, so that various types of objects, special purpose devices, etc. can be mounted in the form of modules for various purposes.

### BRIEF DESCRIPTION OF ACCOMPANYING DRAWINGS

FIG. 1 illustrates a remote control system of supporting an animal to perform a separation operation of animal according to one embodiment of the present invention;
FIG. 2 illustrates a remotely controlling method to be performed on the remote control system of supporting an animal to perform a separation operation of animal;
FIG. 3 is a block diagram of the remote control system of supporting an animal to perform a separation operation of animal according to one embodiment of the present invention;
FIG. 4 illustrates an animal wearing a wearable device;
FIG. 5 illustrates a drone that is docked to the wearable device that the animal is wearing;
FIG. 6 is a cross-sectional view of animal that is wearing the wearable device;
FIG. 7 is a perspective view of drone;
FIG. 8 illustrates a drone that is going down to be docked to a home position in the wearable device;
FIG. 9 illustrates a user terminal that communicates with the animal wearable multi-use module platform system according to one embodiment of the present invention;
FIG. 10 is a conceptual diagram of the animal wearable and multi-purpose module platform system according to one embodiment of the present invention;
FIG. 11 is a conceptual diagram of operation of a module mounting device;
FIG. 12 is a configuration diagram of a battery module;
FIG. 13 shows front and rear perspective views of an animal wearable and multi-purpose module platform system according to another embodiment of the present invention;
FIG. 14 is side views showing a height adjustment process of an animal wearable and multi-purpose module platform system according to another embodiment of the present invention;
FIG. 15 is a diagram showing the installation process of the module mounting device for module installation;
FIGS. 16, 17, and 18 are side views, plan views, and enlarged perspective views of an animal wearable and multi-purpose module platform system according to another embodiment of the present invention;
FIG. 19 is a view showing an extension process of a platform support;
FIG. 20 is a view showing the animal command module mounted on a dog and a perspective view;
FIG. 21 is a perspective view showing a battery module and a mounting structure;
FIG. 22 is another exemplary view of the module platform equipped with a camera module;
FIGS. 23 and 24 are various types of module platforms; and
FIG. 25 is another exemplary view of the battery module.

### DETAILED DESCRIPTION

The invention can be modified in various forms and specific embodiments will be described and shown below. However, the embodiments are not intended to limit the invention, but it should be understood that the invention includes all the modifications, equivalents, and replacements belonging to the concept and the technical scope of the invention.

If it is mentioned that an element is "connected to" or "coupled to" another element, it should be understood that still another element may be interposed therebetween, as well as that the element may be connected or coupled directly to another element. On the contrary, if it is mentioned that an element is "connected directly to" or "coupled directly to" another element, it should be understood that still another element is not interposed therebetween.

Terms such as first, second, etc., may be used to refer to various elements, but, these element should not be limited due to these terms. These terms will be used to distinguish one element from another element.

The terms used in the following description are intended to merely describe specific embodiments, but not intended to limit the invention. An expression of the singular number includes an expression of the plural number, so long as it is clearly read differently. The terms such as "include" and "have" are intended to indicate that features, numbers, steps, operations, elements, components, or combinations thereof used in the following description exist and it should thus be understood that the possibility of existence or addition of one or more other different features, numbers, steps, operations, elements, components, or combinations thereof is not excluded.

Elements of an embodiment described below with reference to the accompanying drawings are not limited to the corresponding embodiment, may be included in another embodiment without departing from the technical spirit of the invention. Although particular description is not made, plural embodiments may be embodied as one embodiment.

In describing the invention with reference to the accompanying drawings, like elements are referenced by like reference numerals or signs regardless of the drawing numbers and description thereof is not repeated. If it is determined that detailed description of known techniques involved in the invention makes the gist of the invention obscure, the detailed description thereof will not be made.

Terms such as - part, ∼ unit, ∼ module mean an element configured for performing a function or an operation. This can be implemented in hardware, software or combination thereof.

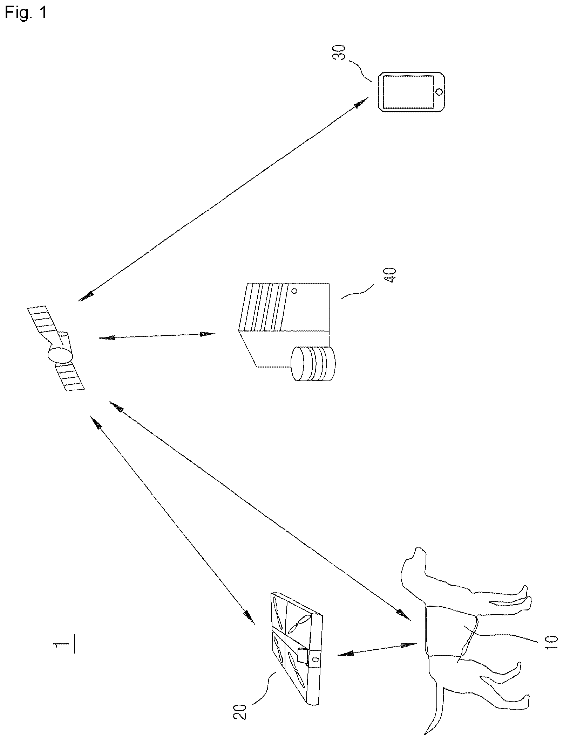

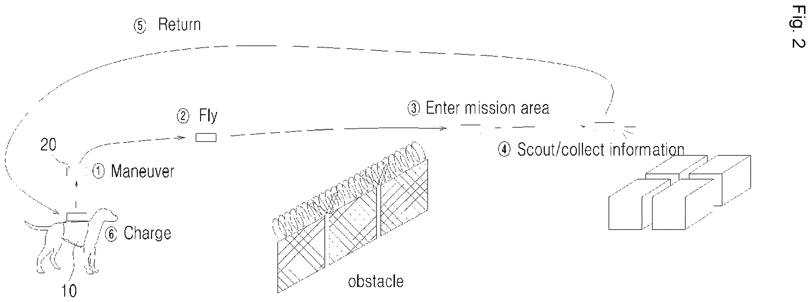

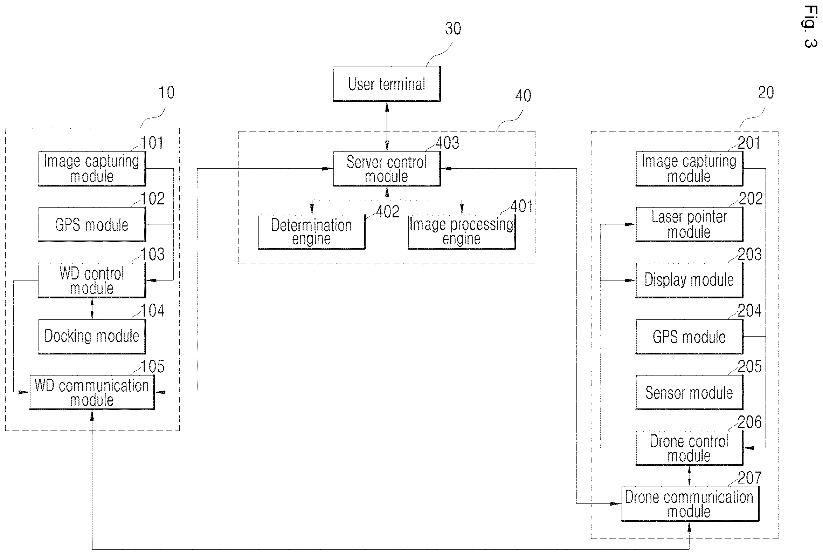

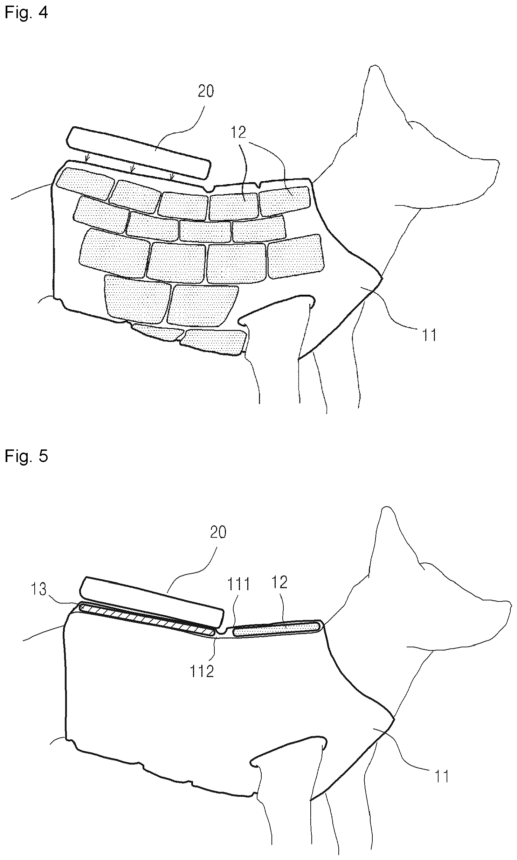

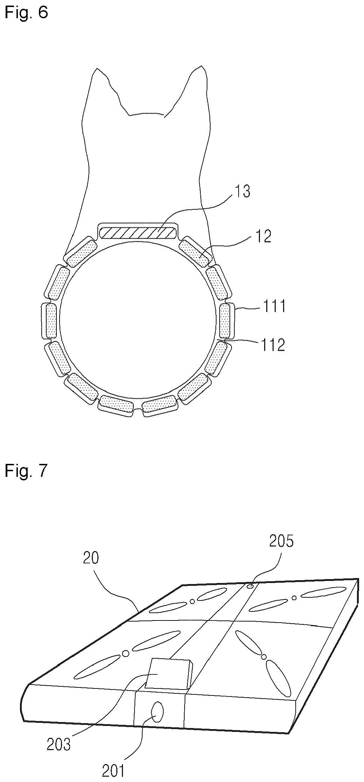

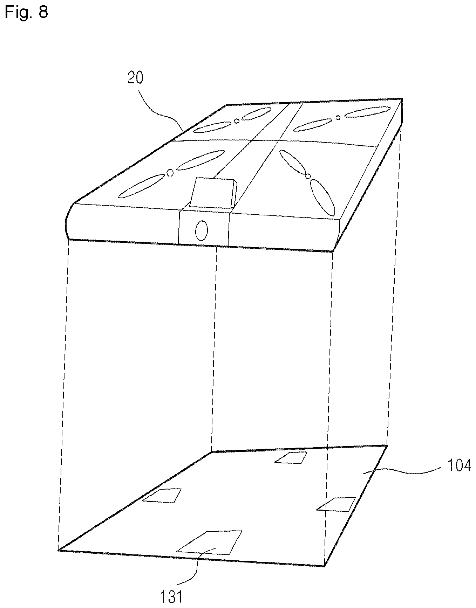

FIG. 1 illustrates a remote control system of supporting an animal to perform a separation operation of animal according to one embodiment of the present invention, FIG. 2 illustrates a remotely controlling method to be performed on the remote control system of supporting an animal to perform a separation operation of animal, FIG. 3 is a block diagram of the remote control system of supporting an animal to perform a separation operation of animal according to one embodiment of the present invention, FIG. 4 illustrates an animal wearing a wearable device, FIG. 5 illustrates a drone that is docked to the wearable device that the animal is wearing, FIG. 6 is a cross-sectional view of animal that is wearing the wearable device, FIG. 7 is a perspective view of drone, and FIG. 8 illustrates a drone that is going down to be docked to a home position in the wearable device.

A remote control system of supporting an animal to perform a separation operation of animal according to one embodiment of the present invention can facilitate a remote interaction between an animal which performs the operation and a user to perform the operation by means of a drone.

Drones can be utilized in various search and detection tasks because of remote controllability and freedom of performing separation tasks. However, practically, it is not easy to move long distance undetected to a mission area to perform tasks independently. Although miniaturized drones are needed to move long distances undetected, miniaturized drones have limited battery capacity and only a few of devices can be mounted on drones. In this case, it is possible to move drones to the mission area rapidly by utilizing trained animals (e.g. (military) dogs), and then to detect and search operations by using drones and military dogs in the mission area. In addition, it is also needed to move batteries to the mission area for supplying power continuously during drones' mission. By using military dogs with excellent capabilities to transport batteries and others and by having them stand by in safe zones, the role of hub for drone management in the mission area can be entrusted to dogs. In addition, since users in charge of the system can control information collected in remote safety zones, it will be greatly benefit to protect the troops in the event of a reduction in the number of troops.

Hereinafter the remote control system 1 according to present embodiment will be described in detail with reference to accompanying drawings.

Referring to FIG. 1, the remote control system 1 includes a wearable device 10 that an animal can wear, one or more drones 20, a user terminal 30 for a user to check information and to issue a remote command, and a server 40 for processing and communicating information.

Referring to FIG. 2, an example of performing separation operation using the remote control system 1 is illustrated.

Animal that wears the wearable device 10 with drone 20 being docked thereto moves to the mission area. If it is difficult to proceed due to obstacles, drone 20 will be released to maneuver (1). Then, the drone 20 flies over obstacles (2) to enter the mission area (3). Subsequently, a reconnaissance in the mission area is carried out using an information collecting device (image capturing module, sensor module, etc.) installed on the drone 20 and various information is collected (4). Upon returning to location on where the animal stands by (5) and docking with the wearable device 10, the battery consumed during the mission (6) will be charged to prepare for the next mission.

Each configuration of the remote control system 1 that supports remotely to perform these separation tasks will be described in detail with referring FIG. 3.

Wearable device 10 may be worn to fit body of an animal that performs the task (hereafter described mainly as 'dog') and took off. For example, it may be made into a vest type.

An equipment that a dog must transport or be mounted may be coupled to the wearable devices 10. In other words, wearable devices 10 may function as a basic platform. Thus, a wearable vest 11 that is made as a covering and equipment combined thereto may constitute a single wearable system.

Refer to FIGS. 4 through 6, the wearable vest 11 is dog-wearable covering, to which various equipment may be coupled.

Outer surface 111 of the covering is made of a highly elastic fabric, and lining may be made of net-like materials to assist ventilation. A highly flexible material (e.g., sponge (112)) may be applied to the inside so that the vest is not uncomfortable with the activity of the dog, and may function as a buffer between the body of the dog and the equipment attached to the outer surface.

Wearable vest 11 may have a structure that can be worn on and took off, so that a single wearable vest 11 may be used in a number of dogs.

Also, since it is worn to an animal such as a dog, a design for hot weather may be applied depending on the timing of the activity.

Docking module 104 is a device that enables the drone 20 to interact with wearable system that a dog is wearing. The drone 20 may be docked on a wearable vest 11 to be supplied with power.

When the drone 20 is docked (or attached) to the wearable device 10, it is possible to transport the drone 20 to a specific area by dog.

If multiple drones, rather than one, are operated simultaneously, the docking modules 104 may also be prepared with the same number of drones and may be equipped on the wearable device 10.

In situation that a single dog operates with multiple drones, the number of docking modules 104 may be the same as the number of drones. Alternatively, by having the docking module 104 be used alternately by two or more drones, less number of docking modules 104 than the number of drones may be equipped.

Docking module 104 includes an electromagnet 13 and a current transfer unit (not shown).

A docking part of the drone 20 located at the bottom of the drone may be made of a magnetically-attachable material (e.g., a steel plate, etc.) having a property that can be coupled to magnets with magnetic force. Therefore, if the electromagnet 13 in the docking module 104 of the wearable device 10 is activated, the docking module 104 of the wearable device 10 and the docking part of the drone 20 may be coupled together.

Alternatively, if used for special purposes (e.g., military), it may be possible to attempt to capture a drone by means of magnetic force. In order to prevent this, an electromagnet may be mounted on the docking part of the drone 20, and the docking module 104 of the wearable device (e.g., a steel plate, etc.) may be made of materials (e.g. a metal plate) that are easily attached to the magnet by means of magnetic force.

Docking module 104 is equipped with a power supplying terminal for supplying current. If the drone is docked, the current is supplied to the drone. The drone has a power receiving terminal that receives the current. Here, supplying current by terminal contact is only one embodiment, and the drone may be charged without contact by a wireless charging method (contactless near-field charging).

When the drone 20 has to be docked to the wearable device 10, the electromagnet 13 is activated. At this point, the magnetic force is generated, and the drone 20 may be docked on the wearable device 10 by the magnetic force. The drone 20 may be coupled by magnetic force without separation.

Since the magnetic force of the electromagnet is large enough, it may be easily coupled by the magnetic force when the drone 20 approaches close to a contact surface. The drone 20 receives power for charging while docked.

When the drone 20 has to be released from the wearable device 10, the electromagnet 13 is deactivated. At this time, the magnetic force disappears, the drone 20 is separated from the wearable device 10, and when the current for charging is cut off as contact is disengaged, the drone 20 may maneuver to fly.

The decision on when the drone 20 will fly may be set by the user through the user terminal 30. If a dog wearing the wearable device 10 is not trained, it may be intimidated by the maneuver and flight of the drone 20, so it may be set up at the user terminal 30 not to maneuver until there is a separate user command after the drone 20 has been released. In the case of well-trained dogs, they do not get scared when they are used to the maneuver and flight of the drone 20, and in this case, the user terminal 30 may set them to maneuver as soon as the drone 20 is released.

It is the most advantageous when a dog and a drone perform a joint task that the drone may be charged continuously by the battery that the dog carries.

Referring to FIGS 4 through 6, each pocket of the wearable vest 11 on the wearable device 10 may be equipped with a rechargeable battery 12 of sufficient capacity. It may be recharged after returning to a pre-set area.

The rechargeable battery 12 may not be detachable from the wearable vest 11, but may be implemented as an integral part of the covering. In this case, the rechargeable battery may be charged by connecting an external charging cable to a single charging terminal that is connected to all the battery packs inside the wearable vest 11.

The rechargeable battery 12 may be arranged to balance a weight equally on the left and right sides of the wearable vest 11. Also, it may be designed in a shape that will not interfere with dog's posture when the dog is running or resting. Alternatively, several thin batteries may be put around the wearable vest 11 and implemented by pre-inserting them within the covering in the fabrication.

It may be possible to arrange and install rechargeable batteries having enough capacity without interference with dog's movement while maintaining dog's activity, and the battery deployment method can be implemented in a variety of ways.

In addition, the rechargeable battery 12 is connected to the power transmission terminal of the docking module 104, allowing the drone to be charged when docking the drone 20. It can also be electrically connected to each component of the wearable device 10 to provide power to function properly.

Referring to FIG. 3 again, WD communication module 105 transmits captured images to the server 40 if the wearable device 10 is equipped with an image capturing module 101 described below in detail.

The image capturing module 101 equipped with drones 20 may not generate high-resolution images due to the size and weight limitations of the onboard systems depending on the specification of the drone. In this case, a high-resolution image capturing module 101 may be mounted to the wearable device 10 to collect high-quality images taken by dogs.

Collecting high-quality images may be absolutely necessary during the dog is performing a task of detecting dangerous situations (exploring explosives, searching for missing persons, searching in enemy territory, finding suspects, tracking suspicious people, exploring enemy infiltration areas, detecting enemy hideouts, etc.). In this case, the wearable device 10 may be equipped with the image capturing module 101, and WD communication module 105 can transmit images collected by the image capturing module 101 to the server 40.

If the present system is used for special purposes (e.g., military), an output power for data transmission and reception may need to be higher than other situation. This is because they have to meet military specifications or military standards. In this case, WD communication module 105 to be installed on the wearable devices 10 is likely to be medium-sized equipment. In other words, it may exceed the size and weight that the drone 20 can carry. In this case, a drone communication module 207 of the drone 20 does not have a high output power, so it may be difficult to communicate directly with the server 40. Thus, for special applications, the drone communication module 207 of the drone 20 may communicate with WD communication module 105 of the wearable device 10 and WD communication module 105 of the wearable device 10 may transmit information from the drone communication module 207 to the server 40 at high output power.

The image capturing module 101 is a camera that takes images around a dog wearing the wearable vest 11. Equipment needed while the dog is performing a task for detecting dangerous situations.

The image capturing module 101 may include an equipment with two or more lenses (or cameras) arranged vertically to take vertically-elongated images. In addition, two or more lenses (or cameras) arranged vertically for the purpose of taking vertically-elongated images can be placed in two pairs, one on the left and one on the right sides of the dog.

Taking vertically-elongated images up reflects the walking and running characteristics of dogs, and is intended to compensate for a large vertical movement. By calibrating the motion patterns of the dog with severe top and bottom shaking to track only a certain object in the image, it is possible to provide an image with less shaking to the user.

GPS module 102 is a GPS tracking device for checking dogs' current location. Information regarding the current location of dog can be obtained from GPS module 102.

WD control module 103 collects information (image data) collected by the image capturing module 101 and transmits it to WD communication module 105. It also responds to an operation command that corresponds to wearable device 10 among operation commands that the user inputs through the user terminal 30.

When used for special purposes, it seamlessly controls the transmission and reception of information collected by drone 20 to the server 40 through WD communication module 105 of the wearable device 10.

In addition, when an error occurs, an error report can be transmitted to the user terminal 30.

Drone 20 includes a drone dockable to the wearable device 10.

Here, various types of drones can be used. Various sizes and types of drones can be applied depending on the breed, size, and purpose of use.

Bottom of the drone may be made of a material (for example, a steel plate, etc.) having properties that couples well to a magnet by magnetic force. A terminal (power receiving terminal) that receives current may be installed on the bottom. When the power receiving terminal contacts the power transmission terminal provided in the docking module 104 of the wearable device 10, current may be received. The drone (especially the battery) may be charged with the received current that is a variety of power sources required for the drone to operate. Of course, a current may be supplied from the wearable device 10 through a wireless charging method in addition to the contact method.

A drone 20 is an unmanned aircraft that can be controlled by radio waves. In this embodiment, depending on the type of task to be performed, an image capturing module 201 (infrared image capturing unit and/or general image capturing unit and microphone), a laser pointer module 202 for indications, the drone communication module 207, a small foldable display module 203, and a sensor module 205 (see FIG. 7) and the like may be mounted. Modules to be mounted may be flexibly detached depending on structures, outputs, and operating conditions of drones.

It is possible to receive a command from a user (human) in the remote to operate the mounted equipment (module), to display information received from the user, or to transmit the collected information to the user terminal 30.

The drone 20 can vary in size and type depending on one or more of the dog's breed, size and purpose of use. Various equipment from drone system will be coupled to the drone 20.

Docking part is provided at the bottom of the drone 20, and may be made of magnetically-attachable material, which is a material having a property that can be coupled to magnets with magnetic force. Alternatively, the drone 20 may be equipped with electromagnet according to embodiment.

The power receiving terminal that receives current is installed in the docking part, so that when the drone 20 docks to the wearable device 10, it may contact the power transmission terminal to receive current. Alternatively, the drone 20 may be charged by a wireless charging method.

Here, referring to FIG. 8, the electromagnets 131 may be distributed in a docking area for the drone 20 in the docking module 104 of the wearable device 10. In this case, the drone 20 may adjust its posture by the four electromagnets 131 during a docking phase so that it is seated in a correct position in a correct posture.

Referring to FIG. 3 again, the image capturing module 201 is a device that takes images of the surrounding environment of the drone 20.

The image capturing module 201 may include at least one of the infrared image capturing unit and the general image capturing unit. In addition, it may further include a microphone for collecting audio signals.

The specifications of the image capturing module 201 may be adjusted according to the size of the drone 20, maximum allowable weight, and the like.

The infrared image capturing unit is an infrared camera that takes an infrared image, and facilitates performing night tasks with no light or dark.

The general image capturing unit is a camera that takes a general image, and is an auxiliary device that allows the user to avoid obstacles in the field of view of the drone or to easily recognize the situation of the drone when the user operates the drone 20 in the remote.

The image capturing module 201 installed in the drone 20 may not have a high resolution due to limitations on a maximum allowable weight. When it is necessary to take and analyze images according to characteristics of the task, as described above, high-definition images may be collected through the image capturing module 101 installed on the wearable device 10.

The collected images may be transmitted to the server 40 through the drone communication module 207. Alternatively, WD communication module 105 on the wearable device 10 may transmit to the server 40.

The laser pointer module 202 is a device capable of indicating an object with a laser pointer so that the dog can recognize it when the directions for the specific object are required.

Animals such as dogs cannot learn demonstrative pronouns, so the laser pointer is needed to accurately indicate the specific object.

Based on the images sent by the image capturing module 201 taken by the drone, the user can manipulate a position for indication of the laser pointer via the user terminal 30. The user command may be processed by the drone control module 206 to control the laser pointer module 202.

The laser pointer module 202 is installed on the drone 20 through a spherical joint mechanism, and can be freely indicate in all directions in a manner to control the spherical joint.

The display module 203 may be a small foldable display equipment.

Display module 203 is equipment that may be used to communicate with object (e.g., humans) that has been contacted through the drone 20.

A drone communication module 207 may receive an image that the user sent through the user terminal 30 and may output it to the display module 203 through the drone control module 206.

The sensor module 205 may be a detection sensor capable of detecting hazardous chemicals. It is possible to check the occurrence of chemical warfare through chemical agent detection.

By sending an inanimate drone 20 Instead of a dog, a living creature to the dangerous area and exploring it first, it is possible to detect hazardous chemical substances in advance.

The sensor module 205 may encrypt only the contents of the collected information and finally transmit it to the server 40 and have the server 40 perform a result determination (diagnosis). This may make it possible to prevent exposure of the judgment criteria of the internal system when the drone 20 is lost to others.

The drone communication module 207 is a device that transmits and receives information (images, sound, location, sensor detection results, etc.) collected from the drone 20 and instructions from users (images sent to the display module 203 and laser pointer indicating locations).

Under special circumstances, the drone communication modules 207 installed in the drone 20 may be difficult to communicate directly with the server 40 through obstacles. In this case, it may be possible to communicate with the WD communication module 105 on the wearable device 10 that is more capable of communicating information. In this case, WD communication module 105 of the wearable device 10 may consist of a high-power communication equipment capable of transmitting and receiving in the specific circumstances.

GPS module 204 is a GPS tracking device for checking the current location of the drone 20. Information on the current location of the drone 20 may be obtained from GPS module 204.

The drone control module 206 collects information (images, sound, location, sensor detection results, etc.) collected by the drone 20, and commands (image sent to the display module 203 by the user, laser pointer indicating location, etc.) from the user and transmits it to the drone communication modules 207.

It also responds to the operation command corresponding to the drone 20 among the commands issued by the user terminal 30.

The user terminal 30 is a user device that remotely operates both wearable device 10 worn by dog and drone 20 that is operating or not operating.

UI and UX designs and functions of the user terminal 30 may be customized for the situation in which the equipment is operated (playing with companion dogs, checking the emergency situation of elderly people living alone, guiding the blind, detecting explosives, detecting enemy infiltration areas, detecting enemy hideouts, etc.).

The server 40 organizes an information flow between the wearable device 10, the drone 20, and the user terminal 30. All information going through the server 40 may be recorded in a time series and may be stored in a separate storage.

In the case of images collected by the image capturing module 101 among the information collected by the wearable device 10, images taken by multiple lenses (cameras) may be collected and finally corrected by an image processing engine 401 as shake-free images.

The image processing engine 401 may combine images taken by multiple vertically arranged lenses (cameras) into vertically-elongated images. Through this, shaking effect due to the large movement in the vertical direction may be excluded.

Based on the learning results, by extracting the object from the image, selecting the object to be tracked from a number of objects, trimming the image around the object to be tracked and correcting a lateral fine movements of the trimmed image due to a lateral movement that occurs when the dog walks, the image may be finally corrected to be the shake-free image. Then, the finally-corrected image is transmitted to the user terminal 30.

The image processing engine 401 may also process and transmit images collected by the image capturing module 201 of the drone 20 to the user terminal 30.

A determination engine 402 is a part that analyzes sensing information collected and transmitted by the sensor module 205 of the drone 20, and determines what kind of chemical is detected. It then transmits whether it is a hazardous substance and the type of chemical substance to the user terminal 30.

A server control module 403 controls the exchange of information between the wearable device 10, the drone 20, and the user terminal 30. The server control module 403 receives images transmitted from the wearable device 10 and forwards it to the user terminal 30. If the wearable device 10 transmits the information collected by the drone 20 to the user terminal 30 on behalf of the drone 20 (under special circumstances), the server control module 403 receives the information collected and transmitted by the drone 20 and forwards it to the user terminal 30.

When the information collected by the drone 20 is transmitted to the user terminal 30, the server control module 403 receives it and transmits it to the user terminal 30. The sensing information collected by the drone 20 is determined by the determination engine 402, and the server control module 403 transmits the result to the user terminal 30.

Multiple images taken by the wearable device 10 is corrected by the image processing engine 401, and the server control module 403 transmits finally-corrected image to the user terminal 30.

Command transmitted by the user terminal 30 is received by the server control module 403 and transmitted to the wearable device 10 or the drone 20 according to the subject of command.

In case that the wearable device 10 receives on behalf of the drone 20 a command that user terminal 30 issued to the drone 20 from the server control module 403 and transmits delivers it back to the drone 20, the command will be transmitted to the wearable device 10.

The server control module 403 may record and store all of these information exchange histories in a time series. In addition, the server control module 403 can record and save all of the various error reports.

The method of remotely supporting a separation operation of an animal according to aforementioned description can be implemented as computer-readable codes on a computer-readable medium. The computer-readable medium may include any kind of recording medium that stores data that can be read by a computer system. The computer-readable medium can be, but not limited to, ROM(Read Only Memory), RAM(Random Access Memory), a magnetic tape, a magnetic disc, a flash memory, an optical data storage and so on. In addition, the computer-readable codes can be distributed to computer systems being connected through a communication network to be stored and executed in a distributed way.

The present embodiment may be applied to not only the situation of using a drone in the play of the owner located in the same space as the dog, but also the situation in which a dog and a drone left alone without the owner play by remote manipulation of a leader (the owner in the remote), the situation in which a drone scouts in the house of an elderly and a companion dog by remote manipulation of a leader who has been approved, the situation in which a drone flies around to collect information around during an interaction between a guide dog and a leader(the blind), the situation in which a drone is operated to indicate a direction of movement of a dog and to collect information around, the situation in which a military dog carrying battery required to charge a drone stands by in a safe zone (drone assembly zone) in an operation area in order to perform a long-distance operation, the situation in which a medium-sized drone is quickly moved into an operation area to perform a long-distance operation, and the like.

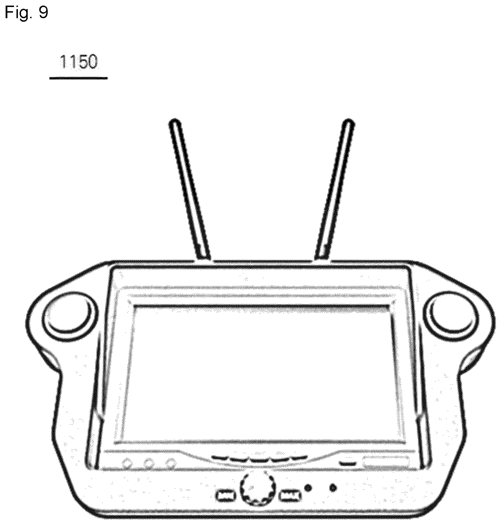

FIG. 9 illustrates a user terminal that communicates with the animal wearable multi-use module platform system according to one embodiment of the present invention.

In this embodiment, the animal wearable multi-use module platform system may include a vest-type wearable device equipment worn by animals (e.g., harnesses), and allows various equipment such as drones, cameras and batteries to be installed in high degrees of freedom.

Referring to FIG. 9, the user terminal 1150 receives sensing data from various equipment of the animal wearable multi-purpose module platform system and outputs it to a screen. In addition, the user input that is input through various buttons or touch screen may be transmitted to various devices mounted on the animal wearable and multi-purpose module platform system to perform an operation according to the user input.

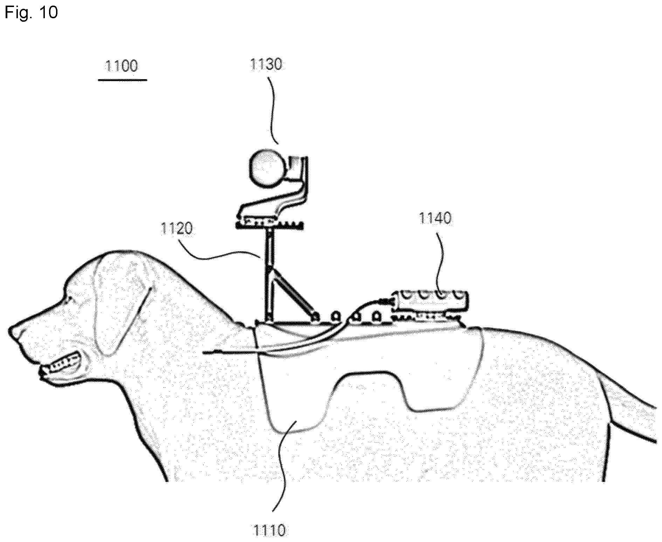

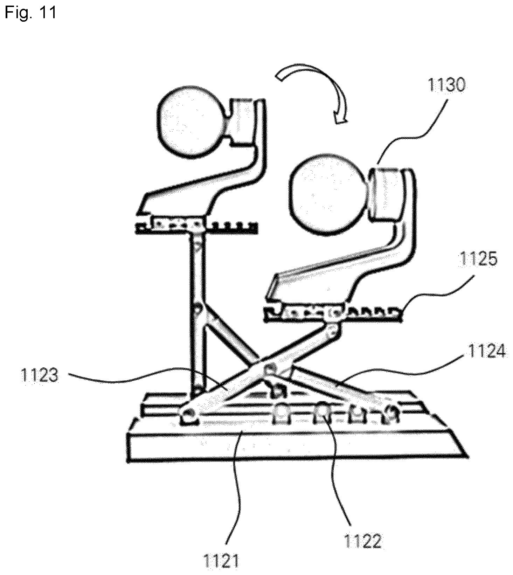

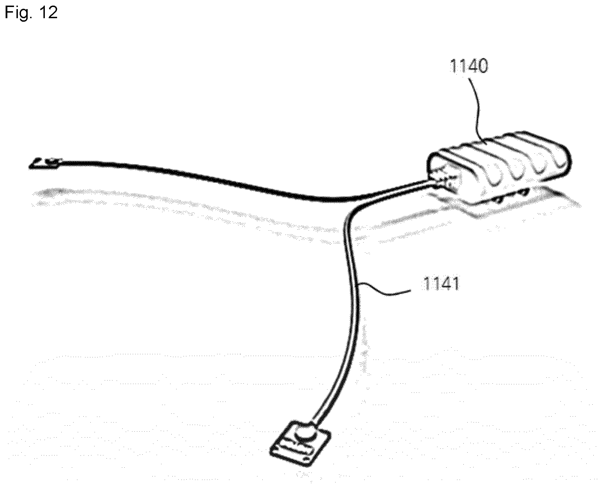

FIG. 10 is a conceptual diagram of the animal wearable and multi-purpose module platform system according to one embodiment of the present invention, FIG. 11 is a conceptual diagram of operation of a module mounting device, and FIG. 12 is a configuration diagram of a battery module.

The animal wearable and multi-purpose module platform system 1100 according to one embodiment of the present invention includes a wearable device 1100 that may be worn to fit body of an animal that performs the task (hereafter described mainly as 'dog') and took off as a basic element. The wearable device 1110 may be made of a type such as a vest or harness.

The animal wearable and multi-purpose module platform system 1100 in accordance with the present embodiment may be used as a basic platform for the wearable devices 1110 and combine equipment that the dog needs to transport or mount.

The module mounting device 1120 enables the module to be fitted with the desired module and its height, front and rear position, and the like of that module to be adjusted. In this embodiment, the module mounting device 1120 may be integrated with the wearable device 1110.

In this embodiment, it will be described on the assumption that a camera module 1130 and a battery module 1140 are installed on the wearable device 1110.

The camera module 1130 is installed on the wearable device 1110 by the module mounting device 1120. The module mounting device 1120 includes a base 1121 secured on the wearable device 1110, a module securing unit 1125 configured for securing the camera module 1130, and two links 1123, 1124 that are arranged between the base and the module securing unit and configured for adjusting a height of the module securing unit. A plurality of fastening protrusions 1122 are installed on a top surface of the base 1121, so that each lower end of the two links 1123 and 1124 can be coupled.

The first link 1123 is hinged to the foremost fastening protrusion. The lower end of the second link 1124 may be coupled to any one of the rear fastening protrusions. The upper end of the second link 1124 may be hinged to the center of the first link 1123.

Depending on the coupled position of the lower end of the second link 1124, the camera module 1130 may adjust its height and its front-rear position.

In addition, the module securing unit 1125 has a long structure in the front-rear direction, so that the camera module 1130 may be secured to the desired position in the front-to-back direction even on the module securing unit 1125.

The top rear of the base (1121) is mounted on rear position on the top surface of the base 1121. The battery module 1140 may be connected through cable 1141 to equipment requiring power. For example, when an animal command module that communicates with the user terminal in the remote and outputs various commands to an animal according to a user input is mounted on the wearable device 1110, the battery module 1140 is connected through a cable 1141.

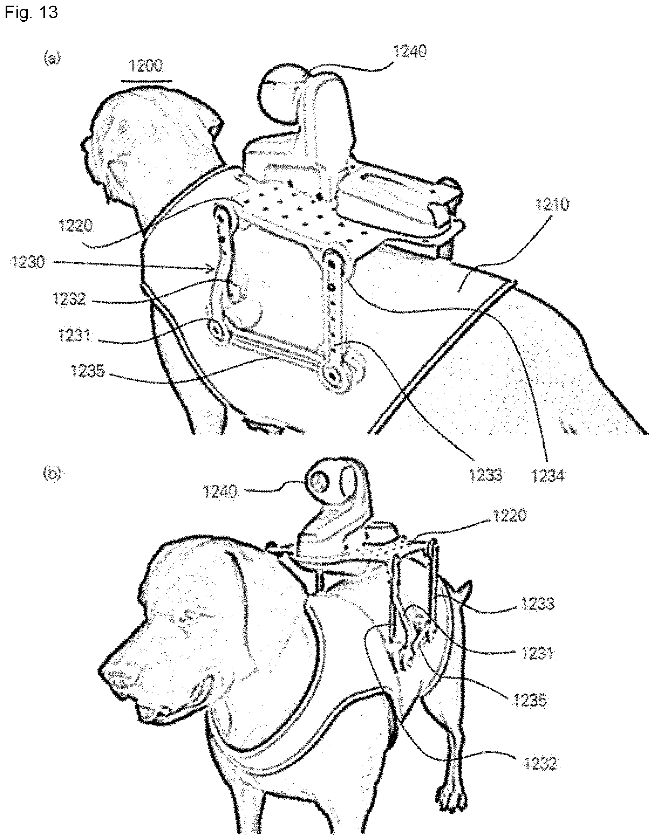

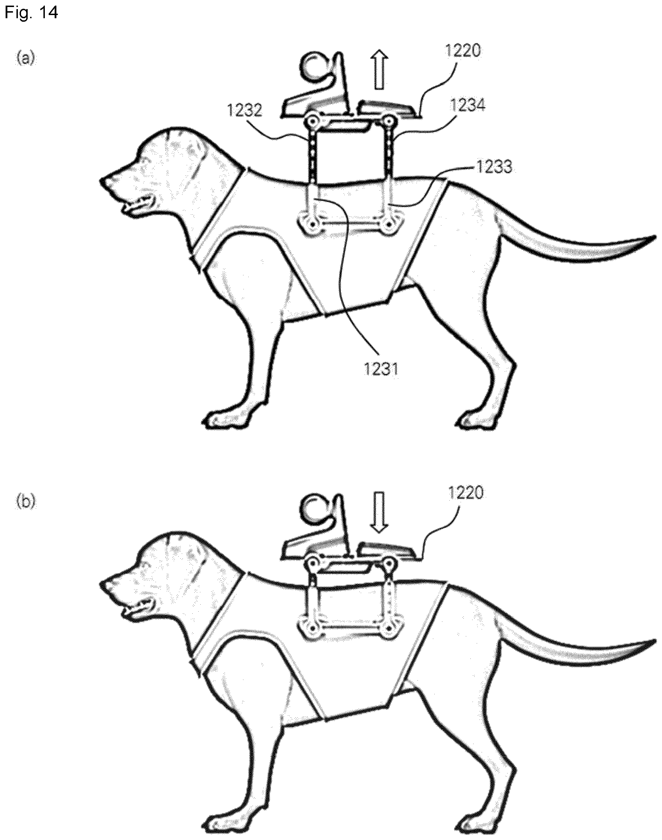

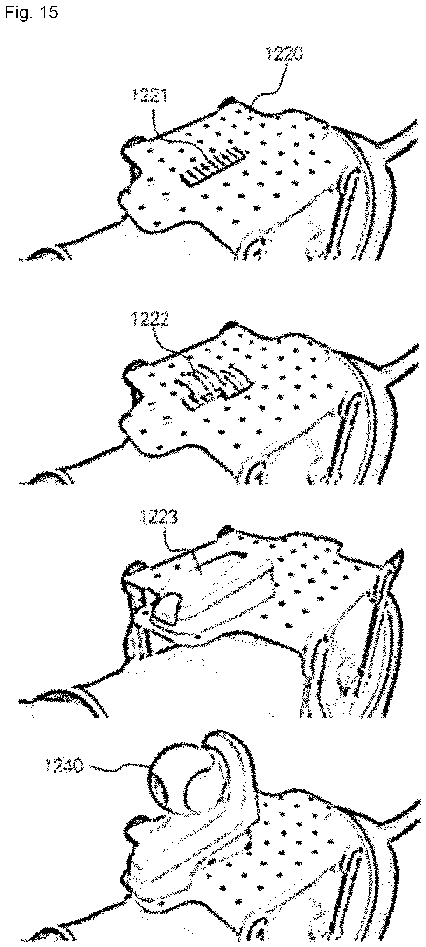

FIG. 13 shows front and rear perspective views of an animal wearable and multi-purpose module platform system according to another embodiment of the present invention, FIG. 14 is side views showing a height adjustment process of an animal wearable and multi-purpose modulariation platform system according to another embodiment of the present invention, and FIG. 15 is a diagram showing the installation process of the module mounting device for module installation.

The animal wearable and multi-purpose module platform system 1200 according to another embodiment of the present invention has a multi-purpose module platform 1220 spaced apart from the wearable device 1210 worn by an animal, so that a desired module can be freely mounted according to a task performed, and it may be adjusted to the desired height without disturbing the movement of the animal.

The animal wearable and multi-purpose and module platform system 1200 according to the present embodiment includes a wearable devices 1210, the module platforms 1220, and a platform support 1230.

A wearable device 1210 is a wearable device worn on an animal that is a leading subject performing a task, and may be a type such as a vest or a harness. However, the wearable device 1210 is made of a soft material to facilitate wearing on or taking off from animals.

In order to overcome the limitations due to these material characteristics, in this embodiment, a module platform 1220 corresponding to a frame capable of maintaining a rigid shape is provided. The module platform 1220 may be made of a metal such as aluminum, or a material such as ABS resin.

The module platform 1220 has a shape of plate with various types of perforated holes that can be fitted with modules suitable for the task through the perforated holes. The module mounted on the module platform 1220 may have a fastening part fitted to the shape, spacing, or the like of holes perforated in the module platform 1220, and thus may be easily mounted at a desired position in the module platform 1220. It would be desirable to balance the left and right when mounting the module so that the entire center of gravity is placed on the animal's spinal line for balance when the animal is moving. In this embodiment, it is assumed that the camera module 1240 is mounted.

Referring to FIG. 15, a basic skeleton 1221 coupled to perforated holes is installed on the module platform 1220. An extension skeleton 1222 may be additionally installed on the basic skeleton 1221 for easy installation of the module. The extension skeleton 1222 may have an arch shape.

A module holder 1223 for easy mounting of various modules may be installed on the extension skeleton 1222. A module performing a function required for a target task may be mounted in a groove formed on the module holder 1223.

Alternatively, a camera module 1240 may be installed directly on the extension skeleton1222.

The height of the modularized platform 1220 may be adjusted according to the size and purpose of the mounted module. In order to adjust the height of the module platform 1220, the platform support 1230 for supporting the module platform 1220 is disposed between the wearable device 1210 and the module platform 1220 (see FIGS. 13 and 14).

The platform support 1230 is divided into a front support and a rear support provided in pairs of left and right. The front support includes a front upper support 1232 and a front lower support 1231. The rear support includes a rear upper support 1234 and a rear lower support 1233.

A plurality of screw holes having equal intervals are perforated in the front upper support 1232 and the front lower support 1231, so that the front upper support 1232 and the front lower support 1231 may be fastened by bolts. The front upper support 1232 may be coupled to the front lower support 1231 at the desired height with respect to the front lower support 1231, thus varying the height of the module platform 1220.

Here, the front lower supporter 1231 may have a shape in which lower portion is inclined to the outside. This is to reduce the interference with the movement of the animal, as the front support is disposed near the forelimb of the animal, which is the main leader performing task.

A plurality of screw holes having equal intervals are perforated in the rear upper support 1234 and the rear lower support 1233, so that the rear upper support 1234 and the rear lower support 1233 may be fastened by bolts. The rear upper support 1234 may be coupled to the rear lower support 1233 at the desired height with respect to the rear lower support 1234, thus varying the height of the module platform 1220.

The lower end of the front support and the lower end of the rear support are supported by a horizontal support 1123. The front and rear ends of the horizontal support 1235 are provided with protrusions protruding inwardly, so that the degree of protruding in the horizontal direction can be adjusted according to the body shape of the animal. Therefore, it is possible to make the platform support 1230 more firmly and stably mounted on the animal.

In this embodiment, the battery module may be installed on the lower surface of the module platform 1220. It is possible to supply power to various equipment mounted on the top of the module platform 1220 or the animal command module to issue commands to the animal through the battery module.

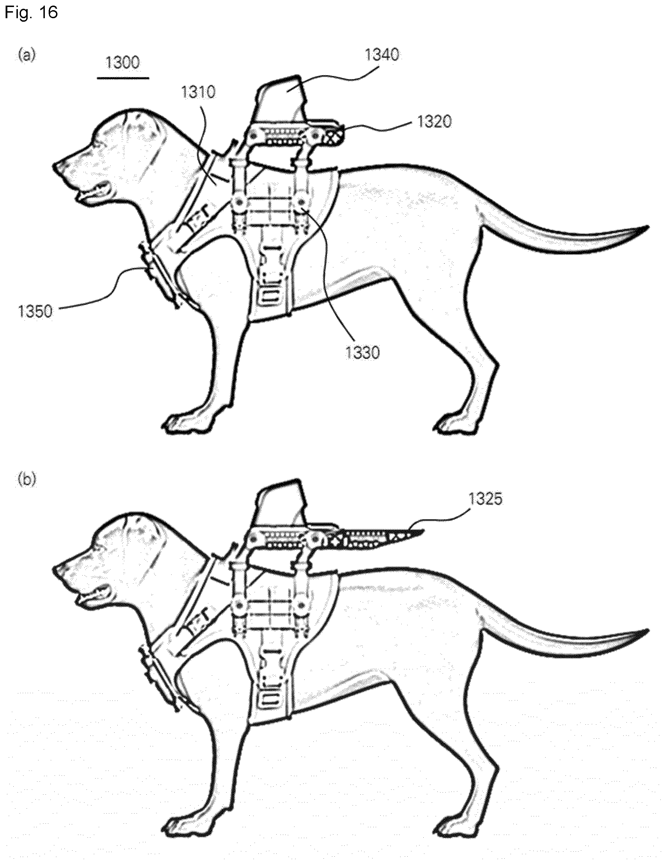

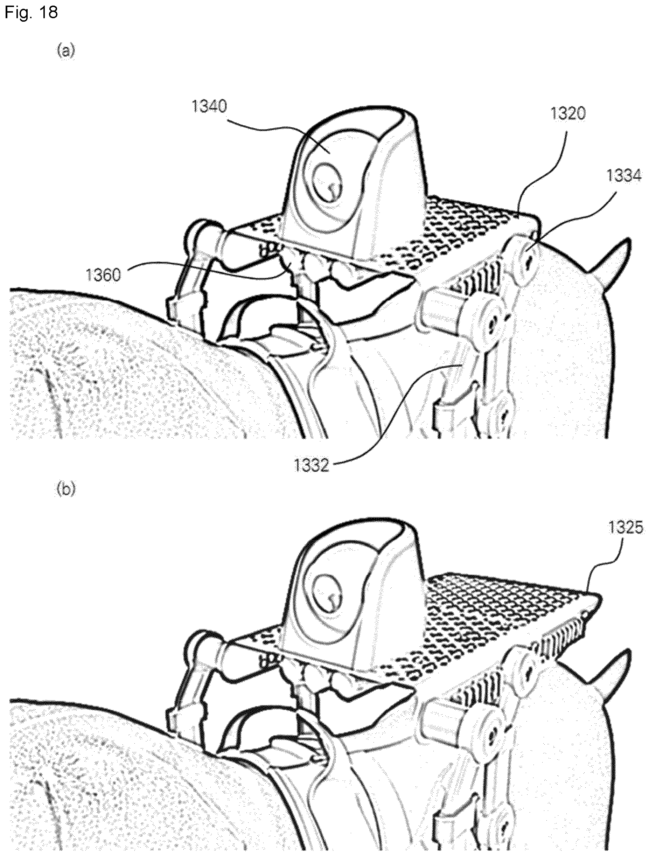

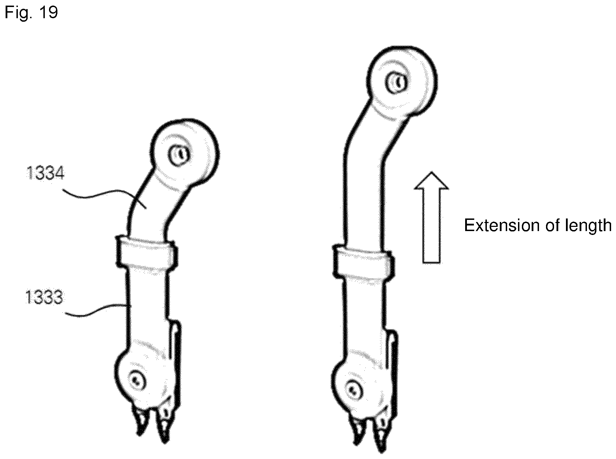

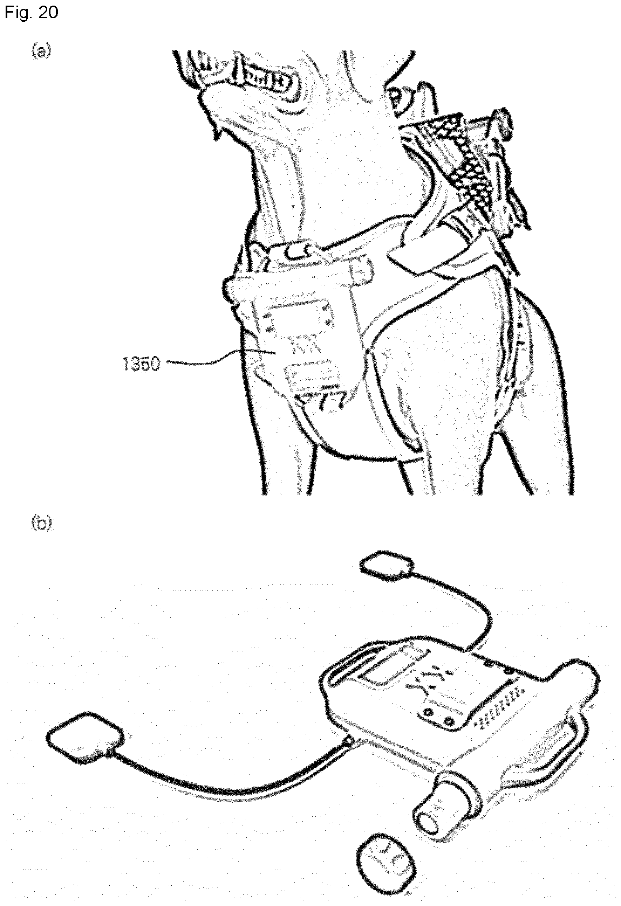

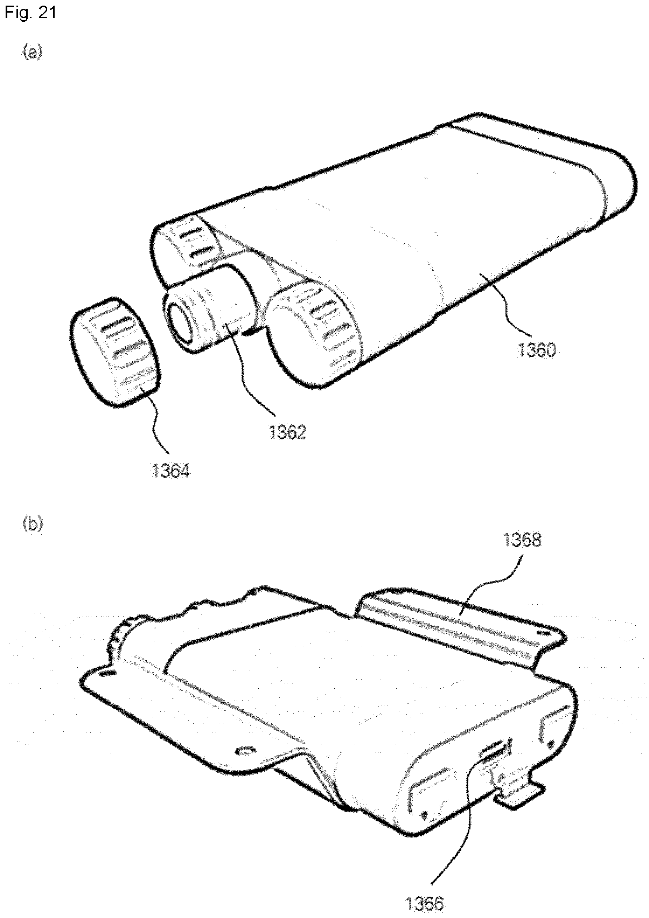

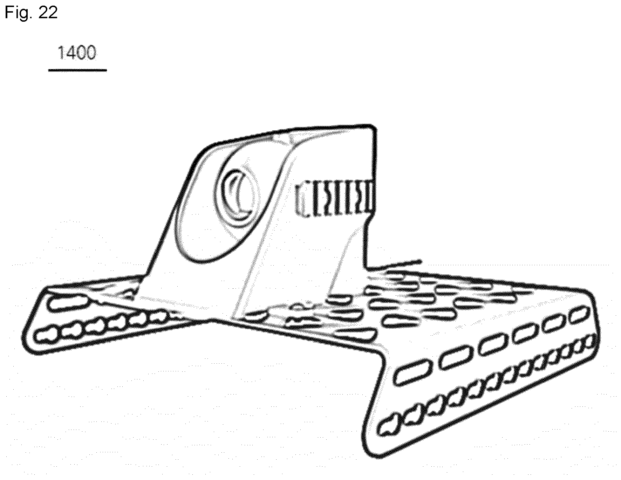

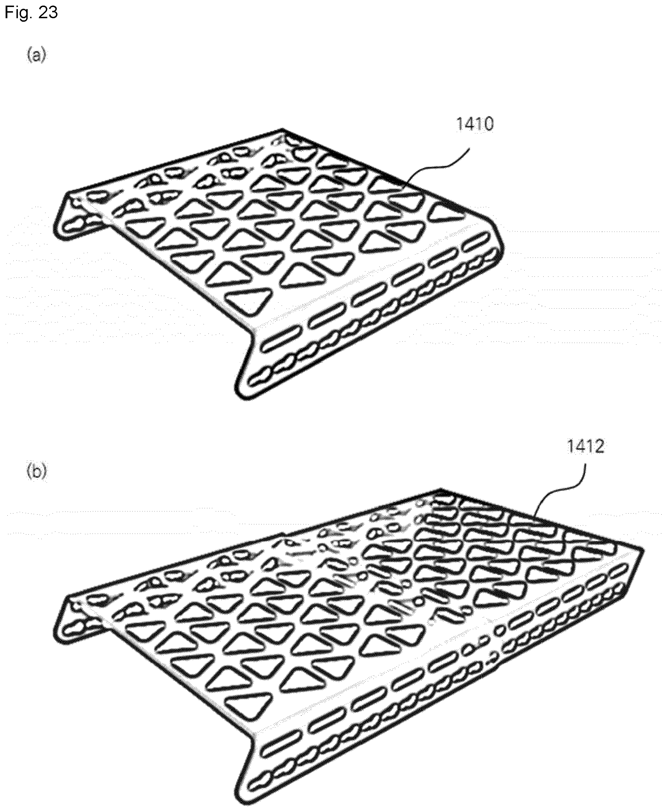

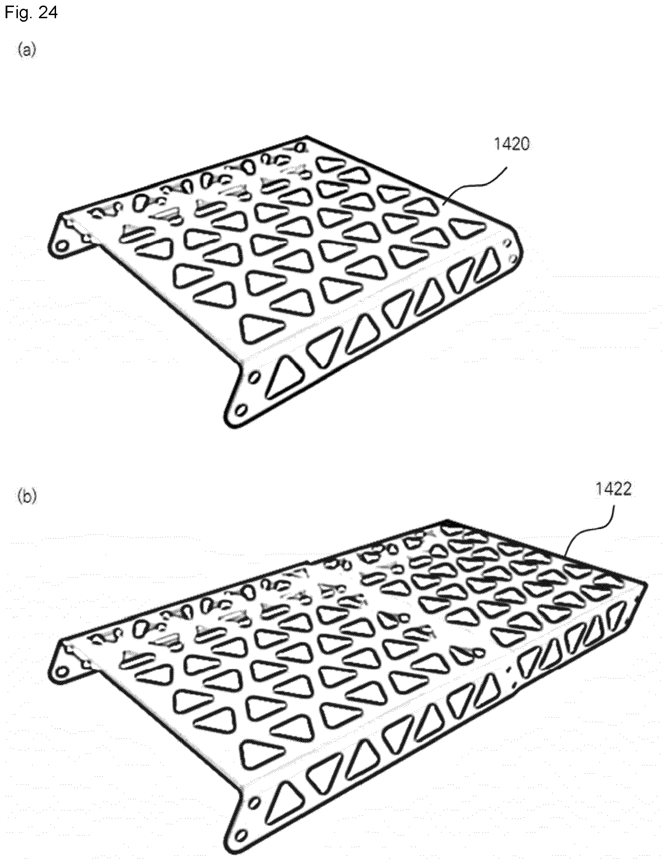

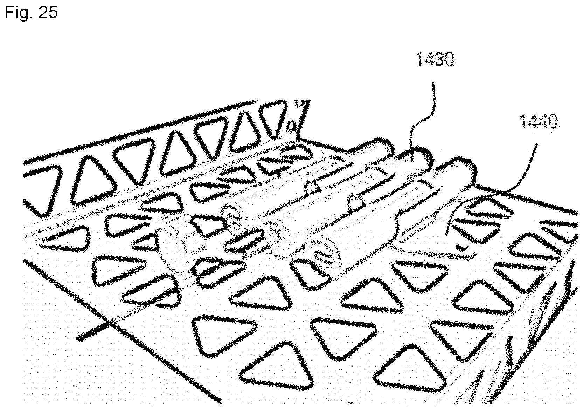

FIGS. 16, 17, and 18 are side views, plan views, and enlarged perspective views of an animal wearable and multi-purpose module platform system according to another embodiment of the present invention, FIG. 19 is a view showing an extension process of a platform support, FIG. 20 is a view showing the animal command module mounted on a dog and a perspective view, FIG. 21 is a perspective view showing a battery module and a mounting structure, FIG. 22 is another exemplary view of the module platform equipped with a camera module, FIGS. 23 and 24 are various types of module platforms, and FIG. 25 is another exemplary view of the battery module.

An animal wearable and multi-purpose module platform system 1300 according to still another embodiment of the present invention also includes a multi-purpose module platform 1320 that is spaced apart from the wearable device 1310 worn by an animal, so it may be possible to freely fit a desired module according to a task to perform and to adjust it to the desired height without interfering with animal's movement.

The animal wearable and multi-purpose module platform system 1300 according to this embodiment includes the wearable device 1310, the module platform 1320, and a platform support 1330. It may further include an animal command module 1350.

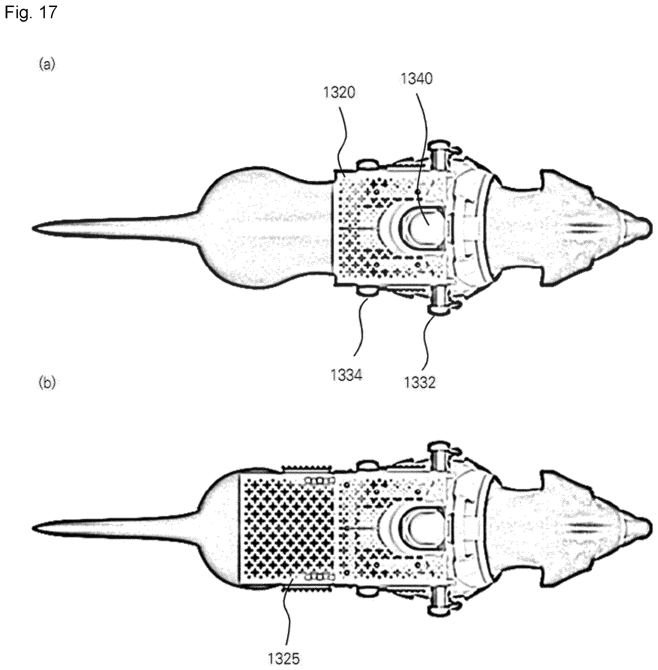

The module platform 1320 has a shape of plate with a curved left and right sides, and various types of holes may be perforated on the surface. The shape of the perforated hole may be, for example, a cross (+) shape (see FIGS. 17 through 18), a triangular shape (see FIGS. 22-25). The hole shape on the main surface and the hole shape on the side may be the same or different. This is because the hole in the side is intended to extend the platform.

The more perforated holes are or the larger holes are, the lighter the weight of the module platform 1320 is, thereby reducing the weight applied to the animal, which is the leading subject to perform a task. In addition, by allowing various modules for performing a task to be fastened through various fastening means, it is possible to easily attach and detach the module.

In addition, the module platforms 1320, 1410, and 1420 may extend to combine extension platforms 1325, 1412, and 1422 that extend downwardly. This may increase the number of modules that can be mounted on the module platform. Alternatively, various modules may be installed by relaxing the size limitation of the mountable modules.

The platform support 1330 includes the front and rear supports.

The front support may be provided with a pair of left and right, and a gap between the left and the right may be wider than the rear support. This is because the front support requires a wider width than the rear support located at the waist as it is positioned closer to the forelimb of the animal.

In this case, a protrusion corresponding to a wider width than the rear support is provided between the front support and the module platform 1320, so that the module platform 1320 may be stably supported.

The front support includes a front upper support 1332 and a front lower support 1331, and the rear support includes a rear upper support 1334 and a rear lower support 1333. The front upper support 1332 has a structure extending upwardly with respect to the front lower support 1331, and the rear upper support 1334 also has a structure extending upwardly with respect to the rear lower support 1333.

Here, the front upper support 1332 and the rear upper support 1334 may have a shape in which the upper portion is bent to the rear. This may reduce the weight on the animal by moving the point where the platform support 1330 is installed on the wearable device 1310 toward the front of the animal.

Referring to FIG. 21, a battery module 1360 may be installed on a lower surface of the module platform 1320. The battery module 1360 includes a housing in which a long rod-shaped battery 1362 is inserted in the longitudinal direction. A groove through which the battery 1362 can be inserted is provided in the front of the housing, and a cover 1344 for detaching the battery 1362 may be installed in the opening of the groove. A charging terminal 1366 is provided at the rear of the housing to charge the internal battery 1362 by connecting a charging cable. The housing may be easily fastened to the lower surface of the module platform 1320 through a fastening bracket 1368.

Alternatively, as illustrated in FIG. 25, a battery module 1430 having a long rod shape same as the battery may be installed. In this case, a fastening bracket 1440 for securing the battery module 1430 may have a fastener having a gripper structure to which each battery module 1430 can be fitted.

The batteries accommodated in the battery modules 1360, 1430 may be taken out of the housing if necessary and mounted on a module requiring the battery. For example, a battery-powered animal command module 1350 is shown in FIG. 20.

The animal command module 1350 includes a communication unit and a speaker. By outputting a pre-trained sound that the can be recognized by the animal when a command is received from the user terminal 1150 through the communication unit, the animal may perform a trained action.

In addition, the animal command module 1350 includes vibration units. The vibration units are mounted on the left shoulder and the right shoulder of the animal, respectively, and when the vibration unit corresponding to the direction in which the animal needs to move is operated according to a command received from the user terminal 1150, the animal looks or moves in the corresponding direction. The task may be performed smoothly.

A camera module 1340 may be installed on the module platform 1320. In the case of the camera module 1340, it may be installed together with a gimbal structure for correcting shake according to animal movement. When a user issues a command through the user terminal 1150 located at a remote location, the user can issue the command while checking the scene from the first person perspective through the camera module 1340.

The animal wearable and multi-purpose module platform system according to the present embodiments has an object to be used for various purposes while being worn by an animal performing a task.

Various types of holes are perforated in the module platform, and a module suitable for the purpose may be mounted on the module platform through the perforated holes. For example, it can be used in accordance with military standards.

When using the user terminal that is a remote command device, if the camera module is installed and used together, it is possible to command while checking the site from the first person perspective. In this case, a gimbal structure or the like may be used to compensate for camera shake.

For military use, a night vision device, x-ray device, and surveillance equipment may also be used. In addition, it is also possible to install monitoring equipment, etc., in the operation area by mounting or detaching on a module platform. In addition, it is possible to monitor in the remote by entering animals in areas where are difficult for humans to enter, and a module platform can also be used as a drone's takeoff, landing, and charging station to perform operations.

When used for lifesaving purposes, rescue dogs may be equipped with a lifesaving kit, a battery pack, an emergency food, etc. on a module platform and may enter to areas where rescue personnel cannot enter.

In these embodiments, when the modularized platform is configured to be separated from the wearable device, a standardized combination method such as Molly can be adopted to increase versatility. In addition, various standardized equipment or objects such as military equipment can be firmly secured through the perforated holes of the module platform. In addition, various modules suitable for special purposes may be produced and secured to a module platform.

While the invention has been described above with reference to exemplary embodiments, it will be understood by those skilled in the art that the invention can be modified and changed in various forms without departing from the concept and scope of the invention described in the appended claims.

## Claims

1. A remote control system of supporting an animal to perform a separation operation of animal, comprising:
a drone, capable of performing a separation operation;
a wearable device, in form of being wearable on an animal and configured for docking the drone;
a server, configured for communicating at least one of the drone and the wearable device to gather information that at least one of the drone or and the wearable device collects, and configured for transmitting a user command to at least one of the drone or and the wearable device; and
a user terminal, configured for receiving and outputting the gathered information in communication with the server, and configured for receiving the user command regarding the drone and the wearable device.

2. The remote control system of claim 1, wherein the wearable device is in form of a wearable vest that is put on to fit the animal and took off,
wherein the wearable device further comprises a docking module, being located on a back portion of the wearable device and configured for docking the drone.

3. The remote control system of claim 2, wherein the docking module comprises an electromagnet that can activate or deactivate and a bottom of the drone comprises a docking part being made of a magnetically-attachable material,
wherein the drone is docked to the docking module on activation of the electromagnet or released from the docking module on deactivation of the electromagnet.

4. The remote control system of claim 2, wherein the docking module is made of a magnetically-attachable material and an electromagnet that can activate or deactivate is located on a bottom of the drone,
wherein the drone is docked to the docking module on activation of the electromagnet or released from the docking module on deactivation of the electromagnet.

5. The remote control system of claim 2, wherein the wearable vest is equipped with a rechargeable battery and a power supplying terminal connected to the rechargeable battery is located on the docking module,
wherein the drone is charged by receiving a power from the rechargeable battery via a power receiving terminal on a bottom of the drone that is electrically connected to the power supplying terminal when the drone is docked.

6. The remote control system of claim 1, wherein the wearable device comprises:
an image capturing module configured for taking a vertically-elongated image by use of more than two cameras that are arranged vertically; and
a WD communication module configured for transmitting the image to the server.

7. The remote control system of claim 1, wherein the drone comprises:
an image capturing module having at least one of an infrared image capturing unit and a general image capturing unit to take an around image;
a sensor module configured for detecting a hazardous chemical substance; and
a drone communication module configured for transmitting the around image and a sensing data of the sensor module to the server or the wearable device.

8. The remote control system of claim 7, wherein the drone further comprises a laser pointer module configured for indicating a certain object with a laser pointer based on an analysis of the around image.

9. The remote control system of claim 1, wherein the server comprises:
an image processing engine configured for processing image that the wearable device or the drone gathers according to a predetermined image processing algorithm; and
a server control module configured for transmitting processed image to the user terminal.

10. The remote control system of claim 9, wherein if images that the wearable device gathered are taken by a plurality of cameras that are arranged vertically, the image processing engine combines the images to generate a vertically-elongated image, extracts a plurality of objects from the vertically-elongated image based on a learning result, identifies an object to track among the plurality of objects, trims the vertically-elongated image around the object to track, and adjusts a lateral fine movement on trimmed image due to a lateral movement that occurs when the animal walks.

11. The remote control system of claim 9, wherein if the drone has a sensor module capable of detecting a chemical material, the server further comprises a determination engine configure for analyzing a sensing data collected from the sensor module and determining a type of the chemical material and whether the chemical material is hazardous.

12. A method of remotely supporting a separation operation of an animal wearing a wearable device configured for docking a drone, comprising:
moving an animal wearing a wearable device to which a drone is docked to an operation area;
deploying the drone by releasing from the wearable device;
performing a predetermined operation when the drone flies to reach the operation area; and
returning and charging the drone by docking to the wearable device after performing the operation.

13. An animal wearable multi-use module platform system, comprising:
a wearable device that an animal can wear; and
a module mounting device, being fixed to a top surface of the wearable device and configured for securing a module,
wherein the module mounting device comprises:
a base being fixed to the top surface of the wearable device,
a module securing unit configured for securing the module to a top surface of itself, and
links, being arranged between the base and the module securing unit and configured for adjusting a height of the module securing unit.

14. An animal wearable multi-use module platform system, comprising:
a wearable device that an animal can wear;
a module platform, on which surface a plurality of holes are formed for various modules to be mounted; and
a platform support, being arranged between the wearable device and the module platform to support the module platform in a flat position and configured for adjusting a height of the module platform.

15. The animal wearable multi-use module platform system of claim 14, wherein the platform support comprises a pair of front supports and a pair of rear supports,
wherein the front support comprises:
a front lower support being fixed to the wearable device, and
a front upper support being coupled to the front lower support and extendable upwardly with respect to the front lower support,
wherein the rear support comprises:
a rear lower support being fixed to the wearable device, and
a rear upper support being coupled to the rear lower support and extendable upwardly with respect to the rear lower support.
